# EUROPEAN PATENT SPECIFICATION

(11) **EP 3 092 082 B1**
(45) Date of publication and mention of the grant of the patent: **12.12.2018**
(21) Application number: 16719501.5
(22) Date of filing: 15.03.2016
(51) Int. Cl.: B05D 7/00, C09D 7/00, G02B 5/20, G02B 5/22, C09D 5/02, C09D 5/32

(54) **ARTICLE WITH REDUCED ABSORBANCE**
GEGENSTAND MIT VERMINDERTER ABSORPTION
ARTICLE AYANT UNE ABSORPTION RÉDUITE

(30) Priority: 19.03.2015 US 201562135364 P
(43) Date of publication of application: 16.11.2016
(73) Proprietor: SABIC Global Technologies B.V., 4612 PX Bergen op Zoom (NL)
(72) Inventor: VAN HEERBEEK, Hendrikus Petrus Cornelis, 4612 PX Bergen op Zoom (NL); TERRAGNI, Matteo, 20826 Misinto (IT); SCHOUWENAAR, Richard, 4612 PX Bergen op Zoom (NL); KULKARNI, Amit, Mount Vernon, Indiana 47620 (US)
(74) Representative: Modiano, Micaela Nadia
(86) International application number: PCT/IB2016/051466
(87) International publication number: WO 2016/147119

(56) References cited:
- JP-A- 2008 229 852
- US-A1- 2004 191 540
- US-A1- 2007 290 172
- US-A1- 2008 286 537
- US-A1- 2012 308 724

## Description

### BACKGROUND

Polycarbonates (PC) are synthetic engineering thermoplastic resins, and are a useful class of polymers having many beneficial properties. With their strength and clarity, polycarbonate resins offer many significant advantages and are used for a number of different commercial applications, including electronic engineering parts, mechanical parts, automotive parts, automotive glazing, and so on. However, polycarbonates, like other polymers, are subject to degradation (i.e., they discolor, lose gloss, become brittle, etc.) as a result of prolonged exposure to direct sunlight.

A number of polycarbonate formulations in the automotive industry with a black color are commercially available. The dark color of automotive parts is commonly obtained by incorporation of carbon black. However, parts which are blackened through these methods absorb light within the visual spectrum and within a significant part of the near infrared (NIR) spectrum, which causes faster heating and more energy absorption.

Further improvements against sunlight degradation are needed. It would be desirable to provide a composition with a reduced absorbance for use in producing exterior automotive parts having exposure to prolonged periods of direct sunlight.

### BRIEF SUMMARY

Disclosed herein is an article comprising a composition with reduced energy absorption.

In an embodiment, an article includes the features of claim 1; wherein the article is a window or a headlamp; and wherein the light transmission is determined using 3.2 mm thick samples using ASTM D1003-00, Procedure B using CIE standard illuminant C, with unidirectional viewing.

In another embodiment, an article includes the features of claim 13; wherein the article is an exterior glazing; and wherein the light transmission is determined using 3.2 mm thick samples using ASTM D1003-00, Procedure B using CIE standard illuminant C, with unidirectional viewing.

The above described and other features are exemplified by the following figures and detailed description.

### BRIEF DESCRIPTION OF THE DRAWINGS

The following is a brief description of the drawings, which are presented for the purposes of illustrating the exemplary embodiments disclosed herein and not for the purposes of limiting the same.
FIG. 1 is a schematic cross-sectional diagram showing the various layers of an embodiment of an article comprising the reduced absorbance composition;
FIG. 2 is a schematic cross-sectional diagram showing the various layers of an embodiment of an article comprising the composition;
FIG. 3 is a schematic of an embodiment of an automobile comprising an article with reduced absorbance;
FIG. 4 is a schematic of an embodiment of an automotive quarter panel comprising the second layer;
FIG. 5 is a schematic of an embodiment of an automotive moonroof comprising the second layer; and
FIG. 6 is a schematic of an embodiment of a method of making an article comprising a reduced absorbance composition.

### DETAILED DESCRIPTION

Articles exposed to sunlight will heat-up as a result of the solar radiation being absorbed. A dark part intrinsically absorbs nearly all visible light and often most of the near-infrared light, and therefore heats up quicker than a lighter-colored part. This additional heating can lead to undesired damage to the dark part. For example, the process of heating and cooling the differences in the expansion coefficient of the different layers of an automotive part can result in one or more of an increase in heat stress, delamination of one or more of the layers, and cracking.

It was surprisingly found that an article comprising a transparent layer and a second layer comprising a composition (herein also referred to as the reduced absorbance composition) resulted in a reduced rate of heat build-up in the article. The reduced heat build-up can lead to a reduced failure at the interface of different layers or at higher stress positions in various applications. It is believed that the improved heat management will result in a decrease in article failure. It noted that the composition can provide the most benefit when used in articles, for example, in automotive parts, that are exposed to direct sunlight, as opposed to indirect exposure. For example, the article is useful for forming parts that make up the exterior of a transportation vehicle (i.e., body panels, head lamps, and windows (for example, a windshield, a side window, a rear window, or a roof window) or a construct material window (for example, when used in a house, office building, green house, and the like). The article can be a glazing. The second layer can be a bezel layer, for example, forming a frame or barrier around a transparent area that is free of the second layer.

The transparent layer can be reflective and can comprise an infrared reflective additive. The transparent layer can reflect greater than or equal to 20%, specifically, greater than or equal to 50% of the light that is shown on the surface. The remaining light that is transmitted through the transparent layer can be transmitted through the second layer, reflected from the second layer, or absorbed by the second layer. The second layer comprises an infrared transmissive additive, an infrared reflective additive, or a combination comprising one or both of the foregoing such that the second layer observes a reduced energy absorbance as compared to the same layer but without the infrared transmissive additive and the infrared reflective additive. For example, the second layer can have an energy absorbance (Ae) of less than or equal to 90%, specifically, less than or equal to 80% as measured in accordance with ISO 9050-2003. The composition can have a light transmission of less than or equal to 40%, specifically, less than or equal to 20%, more specifically, less than or equal to 5%. As used herein, light transmission is determined using 3.2 mm thick samples using ASTM D1003-00, Procedure B using CIE standard illuminant C, with unidirectional viewing.

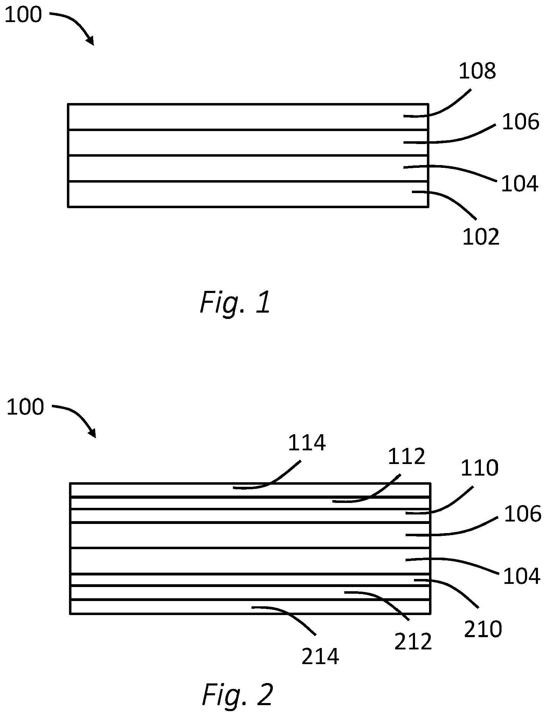

Referring to FIG. 1 and FIG. 2, article 100 includes multiple layers formed, for example, through at least two processing steps. Processing steps can include 1K molding (one-time injection of one material in a mold), 2K molding (two different materials injected into a mold at different times), gluing, coating, and the like. FIG. 1 illustrates that article 100 can comprise optional fixing layer 102, second layer 104 that comprises the composition, and transparent layer 106. Optional fixing layer 102 can comprise metal, glass, polymer, or other material upon which the second layer is fixed. As desired, additional layers can be placed or coated upon the substrate layer or the outermost layer can be optional fixing layer 102. Article 100 can further include coating layer 108 deposited on one or both of second layer 104 and transparent layer 106, specifically, coating layer 108 can be deposited on both second layer 104 and on both sides of transparent layer 106, or coating layer 108 can be applied to both outer most surfaces of article 100. Optional coating layer 108 can be applied to improve weathering performance, scratch resistance, or other properties of the overall automotive part, e.g., a self-cleaning surface coating, or a SLX coating (i.e., a polycarbonate-polyester copolymer). Coating layer 108 can comprise a weathering layer. One or more coating layers 108 can be applied, for example, a weathering layer and an abrasion resistant layer. A coating layer can optionally be located on the outer surface of fixing layer 102.

FIG. 2 illustrates that article 100 can comprise a transparent layer 106, a second layer 104 and a coating layer comprising weathering layer 110, 210 and abrasion resistant layer 112, 212 located on the external sides of the transparent layer 106 and the second layer 104. Specifically, weathering layer 110 can be located in between abrasion resistant layer 112 and transparent layer 106; transparently layer 106 can be located in between second layer 104 and weathering layer 110; and weathering layer 210 can be located in between abrasion resistant layer 212 and second layer 104. FIG. 2 further illustrates that the article can comprise masking layer 114, 214 on one or both sides of the article.

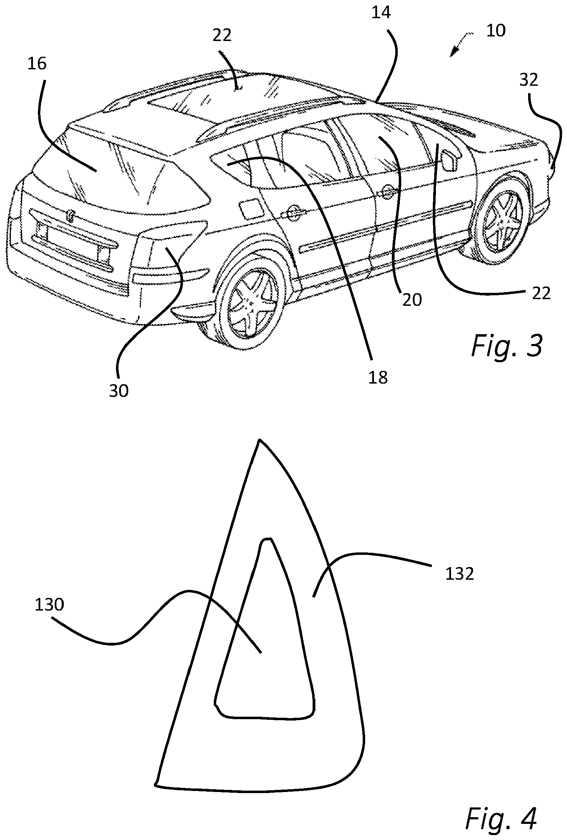

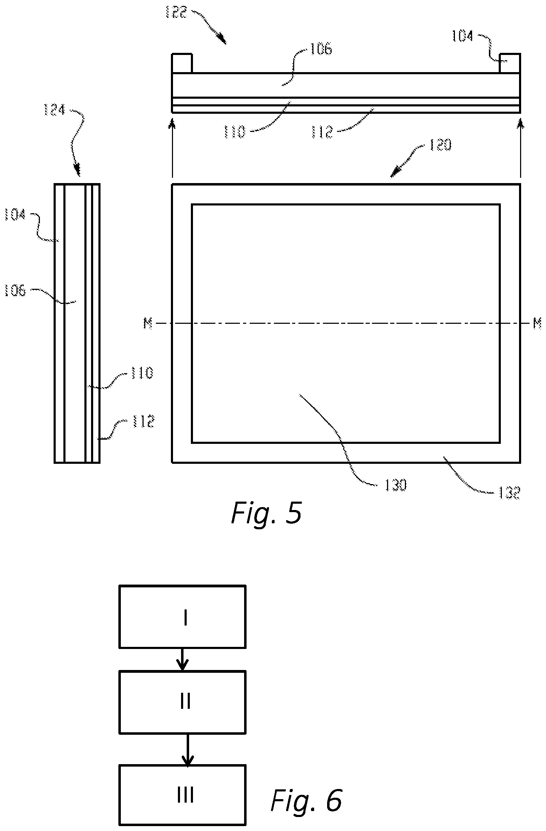

The article can be used in a transparent automotive part, for example, FIG. 3 illustrates automobile 10 that comprises moonroof 22, windshield 14, quarter windows 18 and 22, side window 20, rear window 16, headlight 32, and tail light 20; any of which can comprise the present article. For example, FIG. 4 and 5 illustrate the article is a quarter window and a moonroof, respectively, comprising transparent portion 130 and second portion 132 comprising the composition. In FIG. 5, top view 120, cross-sectional side view 122 taken along line M, and side view 124 are illustrated. Top view 120 shows that the automotive window can comprise transparent portion 130 and second portion 132. Second portion 132 comprises the composition, whereas transparent portion 130 does not comprise the composition. It is noted that while second portion 132 is illustrated to surround transparent portion 130, one skilled in the art can readily envision other configurations of the second portion and the transparent portion. Accordingly, the transparent layer has a first transparent layer surface and wherein the second layer is located on at least a portion of the first transparent layer surface. For example, the portion can span greater than or equal to 5%, specifically, 5 to 90%, more specifically, 10% to 50% of the first transparent layer surface. Second portion 132 can be a bezel.

Cross-sectional side view 122 and side view 124 show that the automotive window can comprise a layered structure comprising second layer 104 that comprises the composition, transparent layer 106 that comprises a transparent composition, weathering layer 110, and abrasion layer 112. One or both of the weathering layer and the abrasion resistant layer can likewise be located on the opposite side of the transparent layer and/or the second layer. A similar configuration could be used in an automotive headlamp.

The transparent layer can be 1 to 10 mm, specifically, 3 to 6 mm thick. The second layer is 0.1 to 5 mm, specifically, 1 to 3 mm thick. The transparent layer and the second layer can have the same thickness or the transparent layer can be thicker than the second layer.

The second layer comprises the composition. The composition comprises an infrared reflective additive, an infrared transmissive additive, or a combination comprising one or both of the foregoing. The composition further comprises a metal, a glass, a polymer (for example, one or both of a thermoset and a thermoplastic polymer), or a combination comprising one or more of the foregoing. The composition comprises a thermoplastic polymer. The composition can further comprise a heat stabilizer; an anti-oxidant; a UV-additive, a release agent, or a combination comprising one or more of the foregoing. The thermoplastic polymer comprises a polycarbonate, an acrylonitrile-butadiene-styrene (ABS) copolymer, a polyalkylene terephthalate (such as polyethylene terephthalate and polybutylene terephthalate), an acrylic polymer (such as polymethacrylate and polymethyl methacrylate, or a combination comprising one or more of the foregoing. The composition can have a light transmission of less than or equal to 30%. The composition can have an Ae of less than 90% when measured according to ISO 9050-2003.

"Polycarbonate" as used herein means a polymer or copolymer having repeating structural carbonate units of formula (1) 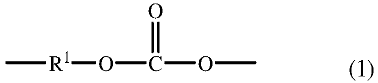 wherein at least 60 percent of the total number of R¹ groups are aromatic, or each R¹ contains at least one C₆₋₃₀ aromatic group. Polycarbonates and their methods of manufacture are known in the art, being described, for example, in WO 2013/175448 A1, US 2014/0295363, and WO 2014/072923. Polycarbonates are generally manufactured from bisphenol compounds such as 2,2-bis(4-hydroxyphenyl) propane ("bisphenol-A" or "BPA"), 3,3-bis(4-hydroxyphenyl) phthalimidine, 1,1-bis(4-hydroxy-3-methylphenyl)cyclohexane, or 1,1-bis(4-hydroxy-3-methylphenyl)-3,3,5-trimethylcyclohexane, or a combination comprising at least one of the foregoing bisphenol compounds can also be used. In a specific embodiment, the polycarbonate is a homopolymer derived from BPA; a copolymer derived from BPA and another bisphenol or dihydroxy aromatic compound such as resorcinol; or a copolymer derived from BPA and optionally another bisphenol or dihydroxyaromatic compound, and further comprising non-carbonate units, for example, aromatic ester units such as resorcinol terephthalate or isophthalate, aromatic-aliphatic ester units based on C₆₋₂₀ aliphatic diacids, polysiloxane units such as polydimethylsiloxane units, or a combination comprising at least one of the foregoing.

"Polycarbonate" and "polycarbonate polymer" as used herein further includes blends of polycarbonates with other copolymers comprising carbonate chain units. An exemplary copolymer is a polyester carbonate, also known as a copolyester-polycarbonate. Such copolymers further contain, in addition to recurring carbonate chain units of formula (1), repeating units of formula (6): 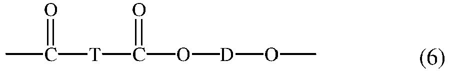 wherein D is a divalent radical derived from a dihydroxy compound, and can be, for example, a C₂₋₁₀ alkylene radical, a C₆₋₂₀ alicyclic radical, a C₆₋₂₀ aromatic radical or a polyoxyalkylene radical in which the alkylene groups contain 2 to 6 carbon atoms, specifically 2, 3, or 4 carbon atoms; and T is a divalent radical derived from a dicarboxylic acid, and can be, for example, a C₂₋₁₀ alkylene radical, a C₆₋₂₀ alicyclic radical, a C₆₋₂₀ alkyl aromatic radical, or a C₆₋₂₀ aromatic radical. In other embodiments, dicarboxylic acids that contain a C₄₋₃₆ alkylene radical can be used to form copolymers of formula (6). Examples of such alkylene radicals include adipic acid, sebacic acid, or dodecanoic acid.

In one embodiment, D is a C₂₋₆ alkylene radical. In another embodiment, D is derived from an aromatic dihydroxy compound of formula (7): 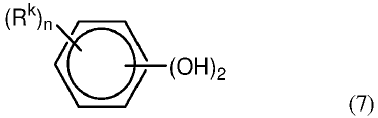 wherein each R^{k} is independently a C₁₋₁₀ hydrocarbon group, and n is 0 to 4. The halogen is usually bromine. Examples of compounds that can be represented by formula (7) include resorcinol, substituted resorcinol compounds such as 5-methyl resorcinol, 5-phenyl resorcinol, 5-cumyl resorcinol, or the like; catechol; hydroquinone; substituted hydroquinones such as 2-methyl hydroquinone, 2-t-butyl hydroquinone, 2-phenyl hydroquinone, 2-cumyl hydroquinone, 2,3,5,6-tetramethyl hydroquinone, or the like; or combinations comprising at least one of the foregoing compounds.

Examples of aromatic dicarboxylic acids that can be used to prepare the polyesters include isophthalic or terephthalic acid, 1,2-di(p-carboxyphenyl)ethane, 4,4'-dicarboxydiphenyl ether, 4,4'-bisbenzoic acid, and mixtures comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or mixtures thereof.

In other embodiments, poly(alkylene terephthalates) can be used. Specific examples of suitable poly(alkylene terephthalates) are poly(ethylene terephthalate) (PET), poly(1,4-butylene terephthalate) (PBT), poly(ethylene naphthanoate) (PEN), poly(butylene naphthanoate), (PBN), poly(propylene terephthalate) (PPT), polycyclohexanedimethanol terephthalate (PCT), and combinations comprising at least one of the foregoing polyesters.

Copolymers comprising alkylene terephthalate repeating ester units with other ester groups can also be useful. Useful ester units can include different alkylene terephthalate units, which can be present in the polymer chain as individual units, or as blocks of poly(alkylene terephthalates). Specific examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexanedimethanol-1,4-cyclohexanedicarboxylate) (PCCD), having recurring units of formula (8): 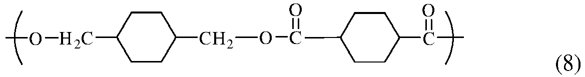 wherein, as described using formula (6), R² is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

Also included in the phrase "polycarbonate polymer" are polycarbonate-polysiloxane copolymers. These copolymers comprise polycarbonate blocks and polydiorganosiloxane blocks. The polycarbonate blocks in the copolymer comprise repeating structural units of formula (1) as described above, for example, wherein R¹ is of formula (2) as described above. These units can be derived from reaction of dihydroxy compounds of formula (3) as described above.

The polydiorganosiloxane blocks comprise repeating structural units of formula (9) (sometimes referred to herein as 'siloxane'): 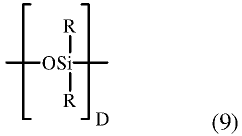 wherein each occurrence of R is same or different, and is a C₁₋₁₃ monovalent organic radical. For example, R can be a C₁-C₁₃ alkyl group, C₁-C₁₃ alkoxy group, C₂-C₁₃ alkenyl group, C₂-C₁₃ alkenyloxy group, C₃-C₆ cycloalkyl group, C₃-C₆ cycloalkoxy group, C₆-C₁₀ aryl group, C₆-C₁₀ aryloxy group, C₇-C₁₃ aralkyl group, C₇-C₁₃ aralkoxy group, C₇-C₁₃ alkaryl group, or C₇-C₁₃ alkaryloxy group. Combinations of the foregoing R groups can be used in the same copolymer. Generally, D can have an average value of 2 to 1,000, specifically, 2 to 500, more specifically, 5 to 200, and more specifically, 10 to 75. Where D is of a lower value, e.g., less than 40, it can be desirable to use a relatively larger amount of the polycarbonate-polysiloxane copolymer. Conversely, where D is of a higher value, e.g., greater than 40, it can be necessary to use a relatively lower amount of the polycarbonate-polysiloxane copolymer. It should be noted that the siloxane blocks in a polycarbonate-polysiloxane copolymer have a distribution of chain lengths, and that D is an average value.

In one embodiment, the polydiorganosiloxane blocks are provided by repeating structural units of formula (10): 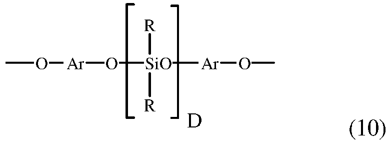 wherein D is as defined above; each R can be the same or different, and is as defined above; and Ar can be the same or different, and is a substituted or unsubstituted C₆-C₃₀ arylene radical, wherein the bonds are directly connected to an aromatic moiety. Suitable Ar groups in formula (10) can be derived from a C₆-C₃₀ dihydroxyarylene compound, for example, a dihydroxyarylene compound of formula (3), (4), or (7) above. Combinations comprising at least one of the foregoing dihydroxyarylene compounds can also be used.

Such units can be derived from the corresponding dihydroxy compound of the following formula (11): 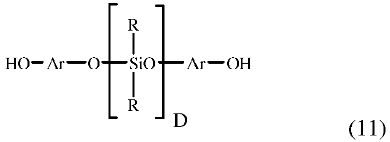 wherein Ar and D are as described above. Compounds of this formula can be obtained by the reaction of a dihydroxyarylene compound with, for example, an alpha, omega-bisacetoxypolydiorangonosiloxane under phase transfer conditions.

The polydiorganosiloxane blocks can comprise repeating structural units of formula (12): 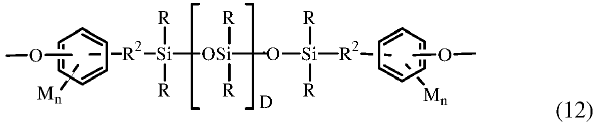 wherein R and D are as defined above. R² in formula (12) is a divalent C2-Cs aliphatic group. Each M in formula (12) can be the same or different, and can be cyano, nitro, C₁-C₈ alkylthio, C₁-C₈ alkyl, C₁-C₈ alkoxy, C2-Cs alkenyl, C2-Cs alkenyloxy group, C3-Cs cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkaryl, or C₇-C₁₂ alkaryloxy, wherein each n is independently 0, 1, 2, 3, or 4.

M can be an alkyl group such as methyl, ethyl, or propyl, an alkoxy group such as methoxy, ethoxy, or propoxy, or an aryl group such as phenyl, or tolyl; R² can be a dimethylene, trimethylene or tetramethylene group; and R can be a C₁₋₈ alkyl, haloalkyl such as trifluoropropyl, cyanoalkyl, or aryl such as phenyl or tolyl. R can be methyl, or a mixture of methyl and phenyl. M can be methoxy, n can be one, Rcan be a divalent C₁-C₃ aliphatic group, and R can be methyl.

These units can be derived from the corresponding dihydroxy polydiorganosiloxane (13): 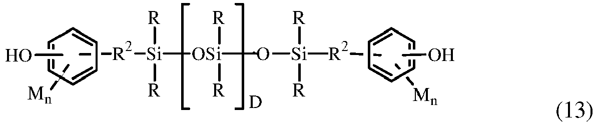 wherein R, D, M, R², and n are as described above.

Such dihydroxy polysiloxanes can be made by effecting a platinum catalyzed addition between a siloxane hydride of formula (14), 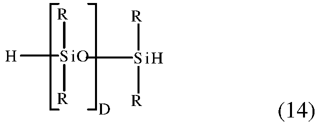 wherein R and D are as previously defined, and an aliphatically unsaturated monohydric phenol. Suitable aliphatically unsaturated monohydric phenols included, for example, eugenol, 2-alkylphenol, 4-allyl-2-methylphenol, 4-allyl-2-phenylphenol, 4-allyl-2-t-butoxyphenol, 4-phenyl-2-phenylphenol, 2-methyl-4-propylphenol, 2-allyl-4,6-dimethylphenol, 2-allyl-6-methoxy-4-methylphenol and 2-allyl-4,6-dimethylphenol. Mixtures comprising at least one of the foregoing can also be used.

The siloxane blocks can make up from greater than zero to 25 wt% of the polycarbonate-polysiloxane copolymer, including 4 to 25 wt%, 4 to 10 wt%, 15 to 25 wt%, or 6 to 20 wt% based on the total weight of the copolymer. The polycarbonate blocks can make up 75 to less than 100 wt% of the block copolymer, including 75 to 85 wt% based on the total weight of the copolymer. It is specifically contemplated that the polycarbonate-polysiloxane copolymer is a diblock copolymer. The polycarbonate-polysiloxane copolymer can have a weight average molecular weight of 28,000 to 32,000 Daltons based on polycarbonate standards. Generally, the amount of the polycarbonate-polysiloxane copolymer is sufficient for the overall polycarbonate composition to contain 2 to 5 wt% of siloxane. For example, if the polycarbonate-polysiloxane copolymer contains 20 wt% of siloxane based on the total weight of the copolymer, the composition can contain 14 to 24 wt% of the polycarbonate-polysiloxane copolymer based on the total weight of the composition.

The polycarbonate can be derived from a dihydroxy compound having the structure of formula (I): 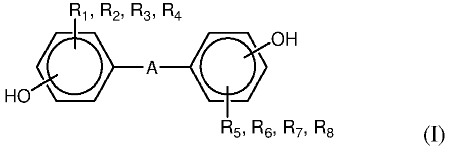 wherein R₁ through R₈ are each independently selected from hydrogen, nitro, cyano, C₁-C₂₀ alkyl, C₄-C₂₀ cycloalkyl, and C₆-C₂₀ aryl; and A is selected from a bond, -O-, -S-, -SO₂-, C₁-C₁₂ alkyl, C₆-C₂₀ aromatic, and C₆-C₂₀ cycloaliphatic.

The dihydroxy compound of formula (I) can be 2,2-bis(4-hydroxyphenyl) propane (i.e., bisphenol-A or BPA). Other illustrative compounds of formula (I) include: 2,2-bis(4-hydroxy-3-isopropylphenyl)propane; 2,2-bis(3-t-butyl-4-hydroxyphenyl)propane; 2,2-bis(3-phenyl-4-hydroxyphenyl)propane; 1,1-bis(4-hydroxyphenyl)cyclohexane; 4,4'dihydroxy-1,1-biphenyl; 4,4'-dihydroxy-3,3'-dimethyl-1,1-biphenyl; 4,4'-dihydroxy-3,3 '-dioctyl-1,1-biphenyl; 4,4'-dihydroxydiphenylether; 4,4'-dihydroxydiphenylthioether; and 1,3 -bis(2-(4-hydroxyphenyl)-2-propyl)benzene.

The polycarbonate can be a bisphenol-A homopolymer. The polycarbonate polymer can have a weight average molecular weight (Mw) of 15,000 to 70,000 Daltons, according to polycarbonate standards, including 15,000 to 22,000 Daltons. The polycarbonate polymer can be a linear or branched polycarbonate, and in more specific embodiments, is a linear polycarbonate.

The thermoplastic polymer can include two polycarbonate polymers, i.e., a first polycarbonate polymer and a second polycarbonate polymer. The two polycarbonate polymers can be derived from the same or different monomers.

The first polycarbonate polymer can have a greater weight average molecular weight than the second polycarbonate polymer. The first polycarbonate polymer can have a weight average molecular weight of greater than or equal to 25,000 Daltons (measured by GPC based on BPA polycarbonate standards), including greater than or equal to 30,000 Daltons. The second polycarbonate polymer can have a weight average molecular weight of less than 25,000 Daltons (measured by GPC based on BPA polycarbonate standards). The weight ratio of the first polycarbonate polymer to the second polycarbonate polymer can be usually at least 0.5:1, or at least 1:1. Note the weight ratio described here is the ratio of the amounts of the two copolymers in the composition, not the ratio of the molecular weights of the two copolymers. It is noted that the weight average molecular weight is measured by GPC based on bisphenol-A polycarbonate standards.

The weight ratio between the two polycarbonate polymers can affect the flow properties, ductility, and surface aesthetics of the final blend. The thermoplastic polymer can include 80 to 99.9 wt% of the first polycarbonate polymer and the second polycarbonate polymer combined based on the total weight of the composition. When considered together, the two polycarbonate polymers can have an average molecular weight of 25,000 to 30,000 Daltons. The polycarbonate can be present in the composition in an amount of 80 to 99.9 wt% based on the total weight of the composition.

It was surprisingly found that the composition that comprises an infrared reflective additive, an infrared transmissive additive, or a combination comprising one or both of the foregoing resulted in a surprising decrease in the infrared absorbance. As used herein, the infrared reflective additive is an additive that reflects infrared light in the wavelength of 700 to 3,000 nanometers (nm) and the infrared transmissive additive is an additive that transmits infrared light in the wavelength of 700 to 3,000 nm. A composition comprising the infrared reflective additive can reflect greater than or equal to 10%, specifically, greater than or equal to 50% of the incident radiation with 700 to 3,000 nm as measured in accordance with ASTM D1003. A composition comprising the infrared transmissive additive can transmit greater than or equal to 5%, specifically, greater than or equal to 20% of the incident radiation with 700 to 3,000 nm as measured in accordance with ASTM D1003.

The infrared transmissive additive can include an anthraquinone dye such as Solvent Green 3 (1,4-di-(p-methylaniline)anthraquinone), a perinone dye such as Solvent Red 135 (8,9,10,11-tetrachloro-12H-phthaloperin-12-one), an azo colorant (such as a di-azo and an azo lake), an enthrone colorant, a quinoline colorant, a perylene colorant, a methane colorant, a coumarin colorant, a phthalimide colorant, a isoindoline colorant, a quinacridone colorant, an azomethine colorant, a naphthalene tetracarboxylic acid colorant, a flavanthrone colorant, an isoindolinone colorant, a tetrachloroisoindolinone colorant, a dioxazine colorant, a phthalocyanine colorant, or a combination comprising one or more of the foregoing. The infrared transmissive additive can comprise one or both of Solvent Green 3 (1,4-di-(p-methylaniline)anthraquinone) and Solvent Red 135 (8,9,10,11-tetrachloro-12H-phthaloperin-12-one). The infrared transmissive additive can comprise Pigment Red 122, Pigment Red 149, Pigment Red 177 Pigment Red 202, Pigment Violet 29, Pigment Blue 15, Pigment Blue 60, Pigment Green 7, Pigment Yellow 119, Pigment Yellow 147, Pigment Yellow 150, or a combination comprising one or more of the foregoing. The infrared transmissive additive can include an anthraquinone dye such as Solvent Green 3 (1,4-di-(p-methylaniline) anthraquinone), a perinone dye such as Solvent Red 135 (8,9,10,11-tetrachloro-12H-phthaloperin-12-one), or a combination comprising one or both of the foregoing.

The infrared transmissive additive can comprise organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes.

The infrared transmissive additive can comprise one or more of the foregoing.

The infrared reflective additive can comprise Pigment Brown 29 (chromium iron oxide), CI Pigment Green 17 (chromium green black hematite), CI Pigment Brown 35, and CI Pigment Black 30 (chrome ion nickel black spinel).

The composition can include 0.1 to 5 wt%, specifically, 0.1 to 2 wt%, more specifically, 0.1 to 1 wt% of the infrared reflective additive, based on the total weight of the composition. The composition can include 0.01 to 2 wt%, specifically, 0.1 to 1.5 wt% of the infrared transmissive additive based on the total weight of the composition. The weight ratio of the infrared reflective additive to the infrared transmissive additive can be 1:20 to 1:1, specifically, 1:10 to 1:1.

The second layer can be a dark layer. As used herein, the term "dark" or "dark colored" is defined according to a suitable metric. One method of measuring colors is the CIELAB color space. This color space uses three dimensions, L*, a*, and b*. L* is the lightness or L-value. The values for L* range from 0 (black) to 100 (diffuse white). The dimension a* is a measure of the color between magenta (positive values) and green (negative values). The dimension b* is a measure of the color between yellow (positive values) and blue (negative values), and can also be referred to as measuring the blueness of the color or as the b-value. Colors can be measured under DREOLL conditions. The L* value is measured according to DREOLL conditions in the CIELAB color space relative to CIE standard illuminant D65. As used herein DREOLL conditions are D65 illumination; CIE LAB Equations; 10 degree observer; reflective mode; specular component excluded (SCE); ultraviolet excluded; big viewport using Macbeth ColorEye™ 7000A spectrophotometer color. Accordingly, the second layer can be a dark layer that has an L* value of less than 20. Conversely the second layer can have an L* value of greater than or equal to 20.

The composition can include a heat stabilizer. The heat stabilizer can include tris(di-t-butylphenyl)phosphite or other similar composition. Other exemplary heat stabilizers include, for example, organophosphites such as triphenyl phosphite, tris-(2,6-dimethylphenyl)phosphite, tris-(mixed mono-and di-nonylphenyl)phosphite, or the like; phosphonates such as dimethylbenzene phosphonate, or the like; phosphates such as trimethyl phosphate, or the like; or combinations comprising at least one of the foregoing heat stabilizers. The heat stabilizer can be used in an amount of 0.0001 to 1 wt% based on the total weight of the composition. The composition can include 0.01 to 0.10 wt% of the heat stabilizer based on the total weight of the composition.

The composition can include an antioxidant. The antioxidant can be octadecyl-3-(3,5-di-tertbutyl-4-hydroxyphenyl)propionate or other similar composition. The antioxidant can include, for example, organophosphites such as tris(nonyl phenyl)phosphite, tris(2,4-di-t-butylphenyl)phosphite (e.g., "IRGAFOS 168" or "1-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate, or the like; amides of beta-(3,5-di-tert-butyl-4-hydroxyphenyl)-propionic acid, or the like; or combinations comprising at least one of the foregoing antioxidants. The antioxidant can be present in an amount of 0.0001 to 1 wt% of the overall composition. The composition can include 0.01 to 0.10 wt% of the antioxidant based on the total weight of the composition.

The composition can also include an ultraviolet (UV) absorbing additive. The UV absorbing additive can be 2-(2 hydroxy-5-t-octylphenyl)benzotriazole, bis[2-hydroxy-5-t-Octyl-3-(benzotriazol-2-yl)phenyl]-methane, or the like. The UV absorbing additive can include, for example, hydroxybenzophenones; hydroxybenzotriazoles; cyanoacrylates; hydroxybenzotriazines; oxanilides; benzoxazinones; or a combination comprising one or more of the foregoing. The UV absorbing additive can comprise bis[2-hydroxy-5-t-octyl-3-(benzotriazol-2-yl)phenyl]-methane), 2- (2H-benzotriazol-2-yl)-4-(1,1,3,3-tetramethylbutyl)-phenol (CYASORB* 5411); 2-hydroxy-4-n-octyloxybenzophenone (CYASORB* 531); 2-[4,6-bis(2,4-dimethylphenyl)-1,3,5-triazin-2-yl]-5-(octyloxy)-phenol (CYASORB* 1164); 2,2'-(1,4- phenylene)bis(4H-3,1-benzoxazin-4-one) (CYASORB* UV-3638); 1,3-bis[(2-cyano-3,3-diphenylacryloyl)oxy]-2,2-bis[[(2-cyano-3,3-diphenylacryloyl)oxy] methyl] propane (UVINUL* 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy] methyl]propane; or a combination comprising one or more of the foregoing. The UV absorbing additive can comprise nano-size inorganic materials such as titanium oxide, cerium oxide, and zinc oxide, all with a particle size of less than or equal to 100 nanometers; or the like, or a combination comprising one or more of the foregoing. The UV absorbing additive can comprise a combination comprising one or more of the foregoing UV absorbing additives. The UV absorbing additive can comprise bis[2-hydroxy-5-t-octyl-3-(benzotriazol-2-yl)phenyl]-methane (CAS # 103597-45-1). The UV absorbing additive can be used in an amount of 0.0001 to 1 wt% of the overall composition. The composition can include 0.01 to 0.3 wt% of the UV absorbing additive based on the total weight of the composition.

The composition can comprise a filler. The filler can comprise mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch, lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated with a layer of metallic material to facilitate conductivity, or surfaces treated with silanes to improve adhesion and dispersion with the polymer matrix. The filler can comprise talc. Fillers are used in amounts of 1 to 200 parts by weight, based on 100 parts by weight based on 100 parts by weight of the composition. The composition can comprise less than or equal to 10 wt% of the filler.

The composition can further include a release agent. The release agent can include the palmitic/stearic acid ester of dipentaerythritol/pentaerythritol. The release agent can comprise octadecanoic acid, 1,2,3-propanetriyl ester (CAS# 537-39-3). Plasticizers, lubricants, and/or mold release agents can also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like. The release agent can comprise glycerol tristearate, glycerol monostearate, stearyl stearate, pentaerythritol tetrastearate, or a combination comprising one or more of the foregoing. The release agent can comprise glycerol tristearate. Such materials are generally used in amounts of 0.001 to 1 wt%, specifically 0.01 to 0.75 wt%, more specifically 0.1 to 0.5 wt% of the overall composition.

Radiation stabilizers can also be present, specifically gamma-radiation stabilizers. Exemplary gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-pene-2-ol, and 9 to decen-1-ol, as well as tertiary alcohols that have at least one hydroxy substituted tertiary carbon, for example, 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group (-CH₂OH) or it can be a member of a more complex hydrocarbon group such as -CR⁴HOH or -CR⁴OH wherein R⁴ is a complex or a simple hydrocarbon. Specific hydroxy methyl aromatic compounds include benzhydrol, 1,3-benzenedimethanol, benzyl alcohol, 4-benzyloxy benzyl alcohol and benzyl benzyl alcohol. 2-Methyl-2,4-pentanediol, polyethylene glycol, and polypropylene glycol are often used for gamma-radiation stabilization. Gamma-radiation stabilizing compounds are typically used in amounts of 0.1 to 10 wt% of the overall composition.

Anti-drip agents can also be present. Anti-drip agents include, for example, a fibril forming or non-fibril forming fluoropolymer such as polytetrafluoroethylene (PTFE). The anti-drip agent can be encapsulated by a rigid copolymer as described above, for example, styrnen-acrylonitrile (SAN). PTFE encapsulated in SAN is known as TSAN. Encapsulated fluoropolymers can be made by polymerizing the encapsulating polymer in the presence of the fluoropolymer, for example, in an aqueous dispersion. TSAN can provide significant advantages over PTFE, in that TSAN can be more readily dispersed in the composition. A suitable TSAN can comprise, for example, 50 wt% PTFE and 50 wt% SAN, based on the total weight of the encapsulated fluoropolymer. The SAN can comprise 75 wt% styrene and 25 wt% acrylonitrile based on the total weight of the copolymer. Alternatively, the fluoropolymer can be pre-blended in some manner with a second polymer for example, an aromatic polycarbonate resin or SAN to form an agglomerated material for use as an anti-drip agent. Either method can be used to produce an encapsulated fluoropolymer. The anti-drip agent can be present in an amount of 0.05 to 1 wt% of the overall composition.

Colorants such as pigment and/or dye additives can also be present in order to offset any color that can be present in the composition and to provide desired color to the customer. Useful pigments can include inorganic pigments such as metal oxides and mixed metal oxides such as zinc oxide, iron oxides, or the like; sulfides such as zinc sulfides, or the like; aluminates; sodium sulfo-silicates sulfates, chromates, or the like; carbon blacks; zinc ferrites; ultramarine blue; organic pigments such as Pigment Red 101, Pigment Red 179, and Pigment Brown 24; or combinations comprising at least one of the foregoing. Pigments are generally used in amounts of 0.00001 to 1.0 wt% of the composition.

The composition can comprise 80 to 99.9 wt% of a thermoplastic polymer, for example, polycarbonate; 0.1 to 2.0 wt% of the infrared reflective additive; 0.1 to 2.0 wt% of the infrared transmissive additive; 0.01 to 0.10 wt% of the heat stabilizer; 0.01 to 0.10 wt% of the antioxidant; and 0.01 to 0.3 wt% of the UV absorbing additive. The composition can further include 0.01 to 0.3 wt% of a release agent.

The composition can comprise 80 to 99.9 wt% of the polycarbonate; 0.5 to 1.0 wt% of the infrared reflective additive; 0.1 to 2.0 wt% of the infrared transmissive
additive; 0.01 to 0.10 wt% of the heat stabilizer; 0.01 to 0.10 wt% of the antioxidant; and 0.01 to 0.3 wt% of the UV absorbing additive. The composition can further include 0.01 to 0.3 wt% of a release agent.

When the composition comprises a polycarbonate, the polycarbonate can comprise a high molecular weight bisphenol-A polycarbonate polymer having a Mw above 25,000 Daltons and a low molecular weight bisphenol-A polycarbonate polymer having a Mw below 25,000 Daltons based on polycarbonate standards; the infrared reflective additive can comprise CI Pigment Brown 29; the infrared transmissive additive can comprise one or both of Solvent Red 135 and Solvent Green 3; the heat stabilizer can comprise tris(di-t-butylphenyl)phosphite; the antioxidant can comprise octadecyl-3-(3,5-di-t-butyl-4-hydroxy phenyl)propionate; and the UV absorbing additive can comprise either 2-(2 hydroxy-5-t-octylphenyl)benzotriazole or bis[2-hydroxy-5-t-octyl-3-(benzotriazol-2-yl)phenyl] -methane.

The composition can have an Ae of less than 90%, less than 85%, or less than 80% when measured according to ISO 9050-2003. This reflects a 10% or more improvement over conventional compositions. The composition can have an L* value of 20 or less. The composition can have an Ae of less than 90%. The composition can have an Ae of less than 85%. The composition can have an L* value of 20 or less, and have an Ae of less than 80%.

The transparent layer can have a light transmission of greater than or equal to 3%, specifically, 3 to 99%, more specifically, 20 to 99%, even more specifically, 50 to 99%. The transparent layer can have a light transmission of greater than or equal to 80%, specifically, greater than or equal to 90%, more specifically, greater than or equal to 95%. The transparent layer can comprise a thermoplastic polymer, for example, as described above. The transparent layer can comprise glass. The transparent layer can comprise a transparent composition, for example, a different polycarbonate material from the composition, a polyacrylate (such as poly(methyl methacrylate), or a combination comprising one or both of the foregoing. The thermoplastic polymer of the transparent layer can be the same or different from the thermoplastic polymer that is present in the composition. The transparent layer can comprise one or both of a second infrared transmissive additive and a second infrared reflective additive. The transparent layer can have a greater light transmission than the second layer.

The article can be formed by a 2K injection molding process. For example, the transparent layer can be molded and the second layer is molded. The article can be formed by laminating the second layer onto the transparent layer. The article can be formed by forming the transparent layer and then depositing the second layer thereon. The article can be formed by co-extruding the transparent layer and the second layer. A weathering layer can then applied to one or both sides of the article. Finally, an abrasion resistant layer can be applied to one or both sides of the article. For example, FIG. 6 illustrates a method of forming the article, comprising step I, forming the transparent layer and the second layer in one or more steps to form the article. The forming of the transparent layer and the forming of the second layer can be via 2K molding, coextrusion, lamination, overmolding, or a combination comprising at least one of the foregoing, for example, via 2K molding. Optional step II includes applying a weathering layer to one or both sides of the article. Optional step III comprises applying an abrasion resistant layer to one or both sides of the article.

In particular, it is contemplated that the article can be used in automotive glazing applications. Non-limiting examples of such articles include multi-layered automotive coatings, sprays, and articles formed via other similar applications. It is noted that in glazing applications, the composition can be uneven in thickness, and so colored pigments can appear to be different colors in different locations. An additional advantage of using the composition can be that the resulting layer is not required to be the outermost (i.e., exterior) layer, where it is noted that typically, colored coatings are usually the top (i.e., outermost) exterior layer. For example, in the present article, the layer can be interior to the transport vehicle or construct material relative to the transparent layer.

The article can be used in transparent transportation parts (such as in cars, trucks, buses, trains, aircraft (such as airplanes or helicopters), water vessels, and the like), for example, a window (such as a sunroof, a quarter window, the backlite (i.e., rear window), the windshield (i.e., front window), headlight covers, taillight covers, and the like). The article can be an exterior glazing, for example, for use in a building (e.g., house (such as a greenhouse), commercial buildings (such as office building, factory, store), and the like). The composition can be used on a blackout area, for example, on a window, ultimately leading to lower heat build-up in the black-out area, which can result in an improvement of one or both of the coating performance and the coating lifetime. The composition can be used on a polymer-glass laminate, such as on bullet proof glass. The composition can be used in a 2K automotive part, for example, in an automotive backlite or a panoramic roof. In the 2K part, one of the layers can be the transparent composition and the other can be the composition including a polycarbonate and an acrylonitrile-butadiene-styrene resin. The article can also be used as a layer in the exterior body panels, if desired. These compositions can also be used to make both the fixing layer and the substrate layer. In this regard, it is noted that although the composition can be dark, the layer formed from it can be somewhat transparent (i.e., see-through) or light-transmissive.

A coating layer can be applied to one or more of an outer surface of the article. The coating layer can comprise one or both of a weathering layer and an abrasion resistant layer. The weathering layer can comprise, for example, a polyurethane coating or a combination of an acrylic primer and a silicone hard-coat. The weathering layer can be a cured coating, for example, that is cured with ultraviolet light. The primer in the weathering layer can be a waterborne acrylic primer comprising water as a first co-solvent and an organic liquid as a second co-solvent. The primer can contain additives, such as, but not limited to, surfactants, antioxidants, biocides, ultraviolet absorbers (UVAs), and drying agents, among others. One example of such an acrylic primer is Exatec™ SHP 9X, (commercially available from Exatec, LLC, Wixom, MI). The resin in the silicone hard-coat can comprise a methylsilsesquioxane resin dispersed in a mixture of alcohol solvents. The silicone hard-coat can comprise other additives, such as surfactants, antioxidants, biocides, ultraviolet absorbers, and drying agents, among others. An example of a silicone hard-coat is Exatec™ SHX (commercially available from Exatec, LLC, Wixom, MI). The weathering layer can be a weathering layer such as SILFORT™ commercially available from Momentive Performance Materials Inc. Waterford, NY.

The weathering layer can be applied to the transparent plastic panel by dipping the panel in the coating at room temperature (for example, at 23 to 25°C) and atmospheric pressure through a dip coating process. Alternatively, the weathering layer can be applied by flow coating, curtain coating, or spray coating. The weathering layer can have a thickness of 5 to 60 micrometers, specifically, 15 to 25 micrometers.

The abrasion resistant layer can comprise an inorganic coating. The inorganic coating can include aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon oxy-carbide, silicon carbide, hydrogenated silicon oxy-carbide, tantalum oxide, titanium oxide, tin oxide, indium tin oxide, yttrium oxide, zinc oxide, zinc selenide, zinc sulfide, zirconium oxide, zirconium titanate, glass, or a combination comprising one or more of the foregoing.

The abrasion resistant layer can be applied by deposition from reactive species, such as those employed in vacuum-assisted deposition processes, and atmospheric coating processes, such as those used to apply sol-gel coatings to substrates. Examples of vacuum-assisted deposition processes include plasma enhanced chemical vapor deposition (PECVD), arc-PECVD, ion assisted plasma deposition, magnetron sputtering, electron beam evaporation, and ion beam sputtering. Examples of atmospheric coating processes include, but are not limited to, curtain coating, spray coating, spin coating, dip coating, and flow coating. The abrasion resistant layer can have a thickness of 0.1 to 10 micrometers, specifically, 1 to 8 micrometers.

The coating layer can comprise a masking layer on one or both sides of the article. The masking layer can be removable. The masking layer can comprise a vinyl protective wrap. The masking layer can have an adhesive layer such that it can be adhesively applied to the article.

It is further contemplated that additional fabrication operations can be performed on said articles, such as, but not limited to spraying, dipping, 1K or 2K molding, injection molding, and the like.

The following examples are provided to illustrate the reduced absorbance composition and automotive part comprising the composition. The examples are merely illustrative and are not intended to limit the disclosure to the materials, conditions, or process parameters set forth therein.

### Examples

Table 1 shows the different components used in the examples.

Table 2 shows the energy absorption (Ae) of an article as illustrated in FIG. 2, where the transparent layer 106 has a thickness of 4 mm, the second layer has a thickness of 2.5 mm, the weathering layers have a thickness of 20 micrometers, and the abrasion resistant layers have a thickness of 5 micrometers. Ae was measured and calculated according to ISO 9050. It is assumed that all not reflected or absorbed sunlight by the second layer 104 and/or the above layers 106, 108 is being absorbed by the fixing layer 102.

| Table 1 | | |
|---|---|---|
| Ingredient | Description | Source |
| PC105 (LEXAN) | Bisphenol-A homopolymer polycarbonate, made by interfacial polymerization (MW 30,000 to 31,000 Daltons based on Polycarbonate standard) | SABIC's Innovative Plastics Business |
| 1-168 (Irgafos 168) | Tris(di-t-butylphenyl)phosphite | Ciba |
| UVA5411 | 2-(2 hydroxy-5-t-octylphenyl) benzotriazole | Cytec Industrial Corp. |

| Table 1 | | |
|---|---|---|
| Ingredient | Description | Source |
| CB | carbon black | |
| Solvent Green 3 | 1,4-di-(p-methylaniline)anthraquinone | |
| Solvent Red 135 | 8,9,10,11-Tetrachloro-12H-phthaloperin-12-one | |
| Pigment Brown 29 | Chromium Iron Oxide | Shepherd Chemical Company |

Examples 1 and 2 do not comprise a second layer 104, where instead, a replacement layer is present. In Example 1, the replacement layer is the same as the transparent layer 106, which has no colorant. In Example 2, the replacement layer is similar to the second layer except that the replacement layer comprises carbon black. Addition of carbon black provides an Ae of almost 95%. Example 3 comprises second layer 104 that comprises a blend of pigment to achieve a dark color. The use of the pigments in Example 3 permits more infrared light to pass through compared to carbon black. Example 3 has an Ae of almost 93%.

Example 4 shows that by using a combination of an infrared reflective additive and an infrared transmissive additive, an Ae of only 78% is achieved. This demonstrates much improved heat management and therefore should represent fewer failures for automotive parts.

| Table 2 | | | | |
|---|---|---|---|---|
| Example | 1 | 2 | 3 | 4 |
| PC105 (wt%) | 99.65 | 99.15 | 99.35 | 98.35 |
| 1-168 (wt%) | 0.05 | 0.05 | 0.05 | 0.05 |
| UVA 5411 (wt%) | 0.3 | 0.3 | 0.3 | 0.3 |
| CB (wt%) | | 0.5 | | |
| Solvent Green 3 (wt%) | | | 0.15 | 0.15 |
| Solvent Red 135 (wt%) | | | 0.15 | 0.15 |
| Pigment Brown 29 (wt%) | | | | 1 |
| Ae (%) | 90.3 | 94.4 | 92.6 | 77.9 |

The singular forms "a," "an," and "the" include plural referents unless the context clearly dictates otherwise. As used in the specification and in the claims, the term "comprising" can include the embodiments "consisting of" and "consisting essentially of."

Numerical values in the specification and claims of this application, particularly as they relate to polymers or polymer compositions, reflect average values for a composition that can contain individual polymers of different characteristics. Furthermore, unless indicated to the contrary, the numerical values should be understood to include numerical values which are the same when reduced to the same number of significant figures and numerical values which differ from the stated value by less than the experimental error of conventional measurement technique of the type described in the present application to determine the value.

All ranges disclosed herein are inclusive of the recited endpoint and independently combinable (for example, the range of "from 2 grams to 10 grams" is inclusive of the endpoints, 2 grams and 10 grams, and all the intermediate values). As used herein, approximating language can be applied to modify any quantitative representation that can vary without resulting in a change in the basic function to which it is related. It should be noted that weight percentage or "wt%", is based on the total weight of the composition.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

## Claims

1. An article comprising:
a transparent layer, wherein the transparent layer has a light transmission of greater than or equal to 3%; and
a second layer comprising a composition, wherein the composition comprises an optional infrared transmissive additive, an infrared reflective additive, and a thermoplastic polymer, wherein the thermoplastic polymer comprises a polycarbonate, a polyalkylene terephthalate, an acrylonitrile-butadiene-styrene copolymer, a polysiloxane, a polyacrylate, or a combination comprising one or more of the foregoing, and wherein the composition has a light transmission of less than 30%;
wherein the transparent layer has a first transparent layer surface and wherein the second layer is located on at least a portion of the first transparent layer surface and at least a portion of the first transparent layer surface is free of the second layer;
wherein the article is a window or a headlamp;
wherein the second layer has a thickness of 0.1 to 5 mm, or 1 to 3 mm thick; and
wherein the light transmission is determined using 3.2 mm thick samples using ASTM D1003-00, Procedure B using CIE standard illuminant C, with unidirectional viewing.

2. The article of Claim 1, wherein the composition comprises 80 to 99.9 wt% of the polycarbonate and 0.1 to 5 wt% of the infrared reflective additive; all based on the total weight of the composition.

3. The article of any of the preceding claims, further comprising at least one of
0.01 to 1.5 wt% of the infrared transmissive additive;
0.01 to 0.10 wt% of a heat stabilizer comprising tris(di-t-butylphenyl)phosphite;
0.01 to 0.10 wt% of an anti-oxidant comprising octadecyl-3-(3,5-di-tertbutyl-4-hydroxyphenyl)propionate; and
0.01 to 0.3 wt% of a UV absorbing additive comprising of 2-(2hydroxy-5-t-octylphenyl)benzotriazole, bis[2-hydroxy-5-t-Octyl-3-(benzotriazol-2-yl)phenyl]-methane, or a combination comprising at least one of the foregoing UV absorbing additives;
wherein the weight percentages are all based on a total weight of the composition.

4. The article of any of the preceding claims, further comprising a coating composition on one or more of the first transparent layer surface, a second transparent layer surface, and an outer surface of the second layer; and wherein the coating composition comprises one or more of a weathering layer, an abrasion resistant layer, and a masking layer.

5. The article of any of the preceding claims, wherein the article comprises the infrared transmissive additive and wherein the infrared transmissive additive comprises a hydrocarbon and substituted hydrocarbon dyes; a polycyclic aromatic hydrocarbon dye; a scintillation dyes; an aryl- or heteroaryl-substituted poly (C₂₋₈) olefin dye; a carbocyanine dye; an indanthrone dye; a phthalocyanine dye; an oxazine dye; a carbostyryl dye; a napthalenetetracarboxylic acid dye; a porphyrin dye; a bis(styryl)biphenyl dye; an acridine dye; a cyanine dye; a methine dye; an arylmethane dye; an indigoid dye, a thioindigoid dye, a diazonium dye; a nitro dye; a quinone imine dye; an aminoketone dye; a tetrazolium dye; a thiazole dye; a perylene dye, an azo dye, a bis-benzoxazolylthiophene dye; a triarylmethane dye; a xanthene dye; a thioxanthene dye; a naphthalimide dye; a lactone dye; a fluorophore; a luminescent dye, or a combination comprising one or more of the foregoing.

6. The article of Claim 5, wherein article comprises the luminescent dye and wherein the luminescent dye comprises 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or a combination comprising at least one of the foregoing dyes.

7. The article of any of the preceding claims, wherein the infrared reflective additive comprises Pigment Brown 29, CI Pigment Green 17, CI Pigment Brown 35, and CI Pigment Black 30, or a combination comprising one or more of the foregoing.

8. The article of any of the preceding claims, wherein the thermoplastic polymer comprises a polycarbonate comprising a first polycarbonate with a weight average molecular weight of greater than 25,000 Daltons and a second polycarbonate polymer having a weight average molecular weight of less than 25,000 Daltons based on polycarbonate standards.

9. The article of any of the preceding claims, wherein the second layer has an L* value of less than or equal to 20.

10. The article of any of the preceding claims, wherein the second layer is a bezel.

11. The article of any of the preceding claims, wherein the second layer is located on greater than or equal to 5%, specifically, 5 to 90%, more specifically, 10% to 50% of the first transparent layer surface.

12. The article of any of the preceding claims, wherein the composition comprises the infrared transmissive additive.

13. An article comprising:
a transparent layer, wherein the transparent layer has a light transmission of greater than or equal to 3%; and
a bezel comprising a bezel composition, wherein the bezel composition comprises an optional infrared transmissive additive and an infrared reflective additive; wherein the bezel composition comprises a metal, a thermoset polymer, a glass, a composite, or a thermoplastic polymer; wherein the bezel composition has a light transmission of less than 30%; wherein the thermoplastic polymer comprises a polycarbonate, a polyalkylene terephthalate, an acrylonitrile-butadiene-styrene copolymer, a polysiloxane, a polyacrylate, or a combination comprising one or more of the foregoing;
wherein the transparent layer has a first transparent layer surface and wherein the bezel is located on at least a portion of the first transparent layer surface and at least a portion of the first transparent layer surface is free of the bezel;
wherein the bezel has a thickness of 0.1 to 5 mm, or 1 to 3 mm thick;
wherein the article is an exterior glazing; and
wherein the light transmission is determined using 3.2 mm thick samples using ASTM D1003-00, Procedure B using CIE standard illuminant C, with unidirectional viewing.

14. Use of any of the preceding articles as a window or a headlamp.

15. A method of making the article of any of Claims 1 - 13, comprising:
forming the transparent layer; and
forming the second layer adjacent to the transparent layer to form the article wherein the forming the transparent layer and the forming the second layer comprises 2K molding, coextrusion, lamination, overmolding, or a combination comprising at least one of the foregoing; preferably, wherein the forming the transparent layer and the forming the second layer comprises 2K molding.

## Patentansprüche

1. Ein Artikel, der Folgendes umfasst:
eine transparente Schicht, worin die transparente Schicht eine Lichttransmission von größer als oder gleich 3% hat; und
eine zweite Schicht, die eine Zusammensetzung umfasst, worin die Zusammensetzung einen optionalen infrarotdurchlässigen Zusatzstoff umfasst, einen infrarotreflektierenden Zusatzstoff, und ein thermoplastisches Polymer, worin das thermoplastische Polymer ein Polycarbonat, ein Polyalkylenterephthalat, ein Acrylonitril-Butadien-Styren-Copolymer, ein Polysiloxan, ein Polyacrylat, oder eine Kombination umfassend eines oder mehrere der zuvor genannten umfasst, und worin die Zusammensetzung eine Lichttransmission von weniger als 30% hat;
worin die transparente Schicht eine erste transparente Schicht-Oberfläche hat, und worin die zweite Schicht auf mindestens einem Teil der ersten transparenten Schicht-Oberfläche angeordnet ist, und mindestens ein Teil der ersten transparenten Schicht-Oberfläche ist frei von der zweiten Schicht;
worin der Artikel ein Glasfenster oder ein Scheinwerfer ist;
worin die zweite Schicht eine Dicke von 0,1 bis 5 mm hat, oder 1 bis 3 mm dick ist; und
worin die Lichttransmission bestimmt wird unter Verwendung von 3,2 mm dicken Proben unter Verwendung von ASTM D1003-00, Verfahren B unter Verwendung von CIE Normlichtart C, bei unidirektionaler Betrachtung.

2. Der Artikel gemäß Anspruch 1, worin die Zusammensetzung 80 bis 99,9 Gewichts% des Polycarbonats und 0,1 bis 5 Gewichts% des infrarotreflektierenden Zusatzstoffs umfasst; alles basierend auf dem Gesamtgewicht der Zusammensetzung.

3. Der Artikel gemäß irgendeinem der vorhergehenden Ansprüche, weiter umfassend mindestens eines von
0,01 bis 1,5 Gewichts% des infrarotdurchlässigen Zusatzstoffs;
0,01 bis 0,10 Gewichts% eines Hitzestabilisators umfassend tris(di-t-Butylphenyl)phosphit;
0,01 bis 0,10 Gewichts% eines Antioxidans umfassend Octadecyl-3-(3,5-di-tertbutyl-4-hydroxyphenyl)propionat; und
0,01 bis 0,3 Gewichts% eines UV absorbierenden Zusatzstoffs umfassend 2-(2-Hydroxy-5-t-octylphenyl)benzotriazol, bis[2-Hydroxy-5-t-octyl-3-(benzotriazol-2-yl)phenyl]-methan, oder eine Kombination umfassend mindestens einen der zuvor genannten UV absorbierenden Zusatzstoffe;
worin die Gewichtsprozentsätze alle auf einem Gesamtgewicht der Zusammensetzung basieren.

4. Der Artikel gemäß irgendeinem der vorhergehenden Ansprüche, weiter umfassend eine Beschichtungszusammensetzung auf einer oder mehreren der ersten transparenten Schicht-Oberfläche, einer zweiten transparenten Schicht-Oberfläche, und einer äußeren Oberfläche der zweiten Schicht; und worin die Beschichtungszusammensetzung eines oder mehrere von einer Verwitterungsschicht, einer abrasionsresistenten Schicht, und einer Maskierungsschicht umfasst.

5. Der Artikel gemäß irgendeinem der vorhergehenden Ansprüche, worin der Artikel den infrarotdurchlässigen Zusatzstoff umfasst und worin der infrarotdurchlässige Zusatzstoff Folgendes umfasst: einen Kohlenwasserstoff und substituierte Kohlenwasserstofffarbstoffe; einen polyzyklischen aromatischen Kohlenwasserstofffarbstoff; einen Szintillationsfarbstoff; einen Aryl- oder Heteroaryl-substituierten Poly (C₂₋₈) Olefinfarbstoff; einen Carbocyaninfarbstoff; einen Indanthronfarbstoff; einen Phthalocyaninfarbstoff; einen Oxazinfarbstoff; einen Carbostyrylfarbstoff; einen Naphthalentetracarbonsäurefarbstoff; einen Porphyrinfarbstoff; einen bis(Styryl)biphenylfarbstoff; einen Acridinfarbstoff; einen Cyaninfarbstoff; einen Methinfarbstoff; einen Arylmethanfarbstoff; einen Indigoidfarbstoff, einen Thioindigoidfarbstoff, einen Diazoniumfarbstoff; einen Nitrofarbstoff; einen Chinoniminfarbstoff; einen Aminoketonfarbstoff; einen Tetrazoliumfarbstoff; einen Thiazolfarbstoff; einen Perylenfarbstoff, einen Azofarbstoff, einen bis-Benzoxazolylthiophenfarbstoff; einen Triarylmethanfarbstoff; einen Xanthenfarbstoff; einen Thioxanthenfarbstoff; einen Naphthalimidfarbstoff; einen Lactonfarbstoff; ein Fluorophor; einen lumineszierenden Farbstoff, oder eine Kombination umfassend einen oder mehrere der zuvor genannten.

6. Der Artikel gemäß Anspruch 5, worin der Artikel den lumineszierenden Farbstoff umfasst und worin der lumineszierende Farbstoff Folgendes umfasst: 7-Amino-4-methylcumarin; 3-(2'-Benzothiazolyl)-7-diethylaminocumarin; 2-(4-Biphenylyl)-5-(4-t-butylphenyl)-1,3,4-oxadiazol; 2,5-bis-(4-Biphenylyl)-oxazol; 2,2'-Dimethyl-p-quaterphenyl; 2,2-Dimethyl-p-terphenyl; 3,5,3'''',5''''-Tetra-t-butyl-p-quinquephenyl; 2,5-Diphenylfuran; 2,5-Diphenyloxazol; 4,4'-Diphenylstilben; 4-Dicyanomethylen-2-methyl-6-(p-dimethylaminostyryl)-4H-pyran; 1,1'-Diethyl-2,2'-carbocyaninjodid; 3,3'-Diethyl-4,4',5,5'-dibenzothiatricarbocyaninjodid; 7-Dimethylamino-1-methyl-4-methoxy-8-azachinolon-2; 7-Dimethylamino-4-methylchinolon-2; 2-(4-(4-Dimethylaminophenyl)-1,3-butadienyl)-3-ethylbenzothiazoliumperchlorat; 3-Diethylamino-7-diethyliminophenoxazoniumperchlorat; 2-(1-Naphthyl)-5-phenyloxazol; 2,2'-p-Phenylen-bis(5-phenyloxazol); Rhodamin 700; Rhodamin 800; Pyren, Chrysen, Rubren, Coronen, oder dergleichen; oder eine Kombination umfassend mindestens einen der zuvor genannten Farbstoffe.

7. Der Artikel gemäß irgendeinem der vorhergehenden Ansprüche, worin der infrarotreflektierende Zusatzstoff Pigment Brown 29, CI Pigment Green 17, CI Pigment Brown 35 und CI Pigment Black 30, oder eine Kombination umfassend einen oder mehrere der zuvor genannten umfasst.

8. Der Artikel gemäß irgendeinem der vorhergehenden Ansprüche, worin das thermoplastische Polymer ein Polycarbonat umfasst, umfassend ein erstes Polycarbonat mit einem Gewichtsmittelmolekulargewicht von größer als 25,000 Dalton und ein zweites Polycarbonat Polymer mit einem Gewichtsmittelmolekulargewicht von weniger als 25,000 Dalton, basierend auf Polycarbonatstandards.

9. Der Artikel gemäß irgendeinem der vorhergehenden Ansprüche, worin die zweite Schicht einen L*-Wert von weniger als oder gleich 20 hat.

10. Der Artikel gemäß irgendeinem der vorhergehenden Ansprüche, worin die zweite Schicht eine Einfassung ist.

11. Der Artikel gemäß irgendeinem der vorhergehenden Ansprüche, worin die zweite Schicht auf mehr als oder gleich 5%, genauer 5 bis 90%, noch genauer 10% bis 50% der ersten transparenten Schicht-Oberfläche angeordnet ist.

12. Der Artikel gemäß irgendeinem der vorhergehenden Ansprüche, worin die Zusammensetzung den infrarotdurchlässigen Zusatzstoff umfasst.

13. Ein Artikel, der Folgendes umfasst:
eine transparente Schicht, worin die transparente Schicht eine Lichttransmission von größer als oder gleich 3% hat; und
eine Einfassung umfassend eine Einfassungszusammensetzung, worin die Einfassungszusammensetzung einen optionalen infrarotdurchlässigen Zusatzstoff und einen infrarotreflektierenden Zusatzstoff umfasst; worin die Einfassungszusammensetzung ein Metall, ein duroplastisches Polymer, ein Glas, einen Verbundstoff, oder ein thermoplastisches Polymer umfasst; worin die Einfassungszusammensetzung eine Lichttransmission von weniger als 30% hat; worin das thermoplastische Polymer ein Polycarbonat, ein Polyalkylenterephthalat, ein Acrylonitril-Butadien-Styren-Copolymer, ein Polysiloxan, ein Polyacrylat, oder eine Kombination umfassend eines oder mehrere der zuvor genannten umfasst;
worin die transparente Schicht eine erste transparente Schicht-Oberfläche hat, und worin die Einfassung auf mindestens einem Teil der ersten transparenten Schicht-Oberfläche angeordnet ist, und mindestens ein Teil der ersten transparenten Schicht-Oberfläche ist frei von der Einfassung;
worin die Einfassung eine Dicke von 0,1 bis 5 mm hat, oder 1 bis 3 mm dick ist;
worin der Artikel eine Außenverglasung ist; und
worin die Lichttransmission bestimmt wird unter Verwendung von 3,2 mm dicken Proben unter Verwendung von ASTM D1003-00, Verfahren B unter Verwendung von CIE Normlichtart C, bei unidirektionaler Betrachtung.

14. Verwendung von irgendeinem der vorhergehenden Artikel als ein Glasfenster oder ein Scheinwerfer.

15. Ein Verfahren zur Herstellung des Artikels gemäß irgendeinem der Ansprüche 1-13, das Folgendes umfasst:
Bilden der transparenten Schicht; und
Bilden der zweiten Schicht angrenzend an die transparente Schicht, um den Artikel zu bilden, worin das Bilden der transparenten Schicht und das Bilden der zweiten Schicht 2K-Formung (2K molding), Coextrusion, Laminierung, Aufspritzen, oder eine Kombination umfassend mindestens eines der zuvor genannten umfasst; vorzugsweise, worin die Bildung der transparenten Schicht und die Bildung der zweiten Schicht 2K-Formung (2K molding) umfasst.

## Revendications

1. Article comprenant :
une couche transparente, dans lequel la couche transparente présente une transmission de la lumière supérieure ou égale à 3 % ; et
une seconde couche comprenant une composition, dans lequel la composition comprend un additif facultatif transmettant les rayons infrarouges, un additif réfléchissant les rayons infrarouges, et un polymère thermoplastique, dans lequel le polymère thermoplastique comprend un polycarbonate, un téréphtalate de polyalkylène, un copolymère d'acrylonitrile-butadiène-styrène, un polysiloxane, a polyacrylate, ou une combinaison comprenant un ou plusieurs des précédents, et dans lequel la composition présente une transmission de la lumière inférieure à 30 % ;
dans lequel la couche transparente a une première surface de couche transparente et dans lequel la seconde couche est située sur au moins une partie de la première surface de couche transparente et au moins une partie de la première surface de couche transparente est exempte de la seconde couche ;
dans lequel l'article est une fenêtre ou une lampe frontale ;
dans lequel la seconde couche a une épaisseur de 0,1 à 5 mm, ou une épaisseur de 1 à 3 mm ; et
dans lequel la transmission de la lumière est déterminée en utilisant des échantillons de 3,2 mm d'épaisseur en utilisant la norme ASTM D1003-00, Procédure B en utilisant l'illuminant C de la norme CIE, avec visualisation unidirectionnelle.

2. Article selon la revendication 1, dans lequel la composition comprend de 80 à 99,9 % en poids du polycarbonate et de 0,1 à 5 % en poids de l'additif réfléchissant les rayons infrarouges ; tous basés sur le poids total de la composition.

3. Article selon l'une quelconque des revendications précédentes, comprenant en outre au moins l'un de
0,01 à 1,5 % en poids de l'additif transmettant les rayons infrarouges ;
0,01 à 0,10 % en poids d'un stabilisant thermique comprenant du tris(di-t-butylphényl)phosphite ;
0,01 à 0,10 % en poids d'un anti-oxydant comprenant de l'octadécyl-3-(3,5-di-tertbutyl-4-hydroxyphényl)propionate ; et
0,01 à 0,3 % en poids d'un additif absorbant les UV comprenant le 2-(2-hydroxy-5-toctylphényl)benzotriazole, le bis[2-hydroxy-5-t-octyl-3-(benzotriazol-2-yl)phényl]-méthane, ou une combinaison comprenant au moins l'un des additifs absorbant les UV précédents ;
dans lequel les pourcentages pondéraux sont tous basés sur un poids total de la composition.

4. Article selon l'une quelconque des revendications précédentes, comprenant en outre une composition de revêtement sur une ou plusieurs de la première surface de couche transparente, d'une seconde surface de couche transparente, et d'une surface externe de la seconde couche ; et dans lequel la composition de revêtement comprend une ou plusieurs d'une couche de protection contre les intempéries, d'une couche résistant à l'abrasion, et d'une couche de masquage.

5. Article selon l'une quelconque des revendications précédentes, dans lequel l'article comprend l'additif transmettant les rayons infrarouges et dans lequel l'additif transmettant les rayons infrarouges comprend un hydrocarbure et des colorants hydrocarbures substitués ; un colorant hydrocarbure aromatique polycyclique ; un colorant de scintillation ; un colorant polyoléfinique (en C₂₋₈) à substitution aryle ou hétéroaryle; un colorant carbocyanine ; un colorant indanthrone ; un colorant phtalocyanine ; un colorant oxazine ; un colorant carbostyryle ; un colorant acide napthalènetétracarboxylique ; un colorant porphyrine ; un colorant bis(styryl)biphényle ; un colorant acridine ; un colorant cyanine ; un colorant méthine ; un colorant arylméthane ; un colorant indigoïde, un colorant thioindigoïde, un colorant diazonium ; un colorant nitro; un colorant quinone imine ; un colorant aminocétone ; un colorant tétrazolium ; un colorant thiazole ; un colorant pérylène, un colorant azoïque, un colorant bis-benzoxazolylthiophène ; un colorant triarylméthane ; un colorant xanthène ; un colorant thioxanthène ; un colorant naphtalimide ; un colorant lactone ; un fluorophore ; un colorant luminescent, ou une combinaison comprenant un ou plusieurs des précédents.

6. Article selon la revendication 5, dans lequel l'article comprend le colorant luminescent et dans lequel le colorant luminescent comprend de la 7-amino-4-méthylcoumarine ; de la 3-(2'-benzothiazolyl)-7-diéthylaminocoumarine ; du 2-(4-biphénylyl)-5-(4-t-butylphényl)-1,3,4-oxadiazole ; du 2,5-bis-(4-biphénylyl)-oxazole ; du 2,2'-diméthyl-p-quaterphényle ; du 2,2-diméthyl-p-terphényle ; du 3,5,3"",5""-tétra-t-butyl-p-quinquéphényle ; du 2,5-diphénylfurane ; du 2,5-diphényloxazole ; du 4,4'-diphénylstilbène ; du 4-dicyanométhylène-2-méthyl-6-(p-diméthylaminostyryl)-4H-pyrane ; de l'iodure de 1,1'-diéthyl-2,2'-carbocyanine ; de l'iodure de 3,3'-diéthyl-4,4',5,5'-dibenzothiatricarbocyanine ; de la 7-diméthylamino-1-méthyl-4-méthoxy-8-azaquinolone-2 ; de la 7-diméthylamino-4-méthylquinolone-2 ; du perchlorate de 2-(4-(4-diméthylaminophényl)-1,3-butadiényl)-3-éthylbenzothiazolium ; du perchlorate de 3-diéthylamino-7-diéthyliminophénoxazonium ; du 2-(1-naphtyl)-5-phényloxazole ; du 2,2'-p-phénylène-bis(5-phényloxazole) ; de la rhodamine 700 ; de la rhodamine 800 ; du pyrène, du chrysène, du rubrène, du coronène, ou autre ; ou une combinaison comprenant au moins l'un des colorants précédents.

7. Article selon l'une quelconque des revendications précédentes, dans lequel l'additif réfléchissant les rayons infrarouges comprend du Pigment Brun 29, du Cl Pigment Vert 17, du Cl Pigment Brun 35 et du Cl Pigment Noir 30, ou une combinaison comprenant un ou plusieurs des précédents.

8. Article selon l'une quelconque des revendications précédentes, dans lequel le polymère thermoplastique comprend un polycarbonate comprenant un premier polycarbonate ayant un poids moléculaire moyen en poids supérieur à 25 000 Daltons et un second polymère de polycarbonate ayant un poids moléculaire moyen en poids inférieur à 25 000 Daltons sur la base des normes de polycarbonate.

9. Article selon l'une quelconque des revendications précédentes, dans lequel la seconde couche a une valeur L* inférieure ou égale à 20.

10. Article selon l'une quelconque des revendications précédentes, dans lequel la seconde couche est une lunette.

11. Article selon l'une quelconque des revendications précédentes, dans lequel la seconde couche est située sur une zone supérieure ou égale à 5 %, spécifiquement, de 5 à 90 %, plus spécifiquement, de 10 % à 50 % de la première surface de couche transparente.

12. Article selon l'une quelconque des revendications précédentes, dans lequel la composition comprend l'additif transmettant les rayons infrarouges.

13. Article comprenant :
une couche transparente, dans lequel la couche transparente présente une transmission de la lumière supérieure ou égale à 3 % ; et
une lunette comprenant une composition de lunette, dans lequel la composition de lunette comprend un additif facultatif transmettant les rayons infrarouges et un additif réfléchissant les rayons infrarouges ; dans lequel la composition de lunette comprend un métal, un polymère thermodurci, un verre, un composite, ou un polymère thermoplastique ; dans lequel la composition de lunette présente une transmission de la lumière inférieure à 30 % ; dans lequel le polymère thermoplastique comprend un polycarbonate, un téréphtalate de polyalkylène, un copolymère d'acrylonitrile-butadiène-styrène, un polysiloxane, un polyacrylate, ou une combinaison comprenant un ou plusieurs des précédents ;
dans lequel la couche transparente a une première surface de couche transparente et dans lequel la lunette est située sur au moins une partie de la première surface de couche transparente et au moins une partie de la première surface de couche transparente est exempte de la lunette ;
dans lequel la lunette a une épaisseur de 0,1 à 5 mm, ou une épaisseur de 1 à 3 mm ;
dans lequel l'article est un vitrage extérieur ; et
dans lequel la transmission de la lumière est déterminée en utilisant des échantillons de 3,2 mm d'épaisseur en utilisant la norme ASTM D1003-00, Procédure B en utilisant l'illuminant C de la norme CIE, avec visualisation unidirectionnelle.

14. Utilisation selon l'une quelconque des revendications précédentes en tant que fenêtre ou lampe frontale.

15. Procédé de fabrication de l'article selon l'une quelconque des revendications 1 à 13, comprenant :
la formation de la couche transparente ; et
la formation de la seconde couche adjacente à la couche transparente pour former l'article dans lequel la formation de la couche transparente et la formation de la seconde couche comprennent un moulage 2K, une coextrusion, une stratification, un surmoulage, ou une combinaison comprenant au moins l'un des précédents ; de préférence, dans lequel la formation de la couche transparente et la formation de la seconde couche comprennent un moulage 2K.
